# EUROPÄISCHE PATENTSCHRIFT

(11) **EP 3 178 727 B1**
(45) Veröffentlichungstag und Bekanntmachung des Hinweises auf die Patenterteilung: **26.02.2020**
(21) Anmeldenummer: 16201631.5
(22) Anmeldetag: 01.12.2016
(51) Int. Cl.: B62D 15/02, G06K 9/00, G08G 1/14

(54) **VERFAHREN ZUM ERKENNEN EINER LÄNGSPARKLÜCKE ZUM PARKEN EINES KRAFTFAHRZEUGS ANHAND EINER FAHRBAHNMARKIERUNG, FAHRERASSISTENZSYSTEM SOWIE KRAFTFAHRZEUG**
METHOD FOR DETECTING A LONGITUDINAL PARKING SPACE FOR PARKING A MOTOR VEHICLE ON THE BASIS OF A ROAD MARKING, DRIVER ASSISTANCE SYSTEM AND MOTOR VEHICLE
PROCÉDÉ DE RECONNAISSANCE DE CRÉNEAU POUR STATIONNEMENT D'UN VÉHICULE AUTOMOBILE À L'AIDE DE MARQUAGE AU SOL, SYSTÈME D'ASSISTANCE AU CONDUCTEUR ET VÉHICULE AUTOMOBILE

(30) Priorität: 10.12.2015 DE 102015121504
(43) Veröffentlichungstag der Anmeldung: 14.06.2017
(73) Patentinhaber: Valeo Schalter und Sensoren GmbH, 74321 Bietigheim-Bissingen (DE)
(72) Erfinder: Blinkle, Frank, 74321 Bietigheim-Bissingen (DE)
(74) Vertreter: Pothmann, Karsten

(56) Entgegenhaltungen:
- EP-A1- 2 055 536
- DE-A1-102014 009 627
- JP-A- H10 264 841
- JP-A- 2014 101 101
- US-A1- 2014 355 822
- US-A1- 2014 371 972

## Beschreibung

Die vorliegende Erfindung betrifft ein Verfahren zum Erkennen einer Längsparklücke zum Parken eines Kraftfahrzeugs, bei welchem während das Kraftfahrzeug relativ zu einer Parkfläche auf einer Fahrspur bewegt wird anhand von Sensordaten zumindest eines Sensors des Kraftfahrzeugs zumindest eine Fahrbahnmarkierung erfasst wird und anhand der erfassten zumindest einen Fahrbahnmarkierung die Längsparklücke innerhalb der Parkfläche erkannt wird. Darüber hinaus betrifft die vorliegende Erfindung ein Fahrerassistenzsystem für ein Kraftfahrzeug. Schließlich betrifft die vorliegende Erfindung ein Kraftfahrzeug.

Das Interesse richtet sich vorliegend auf Fahrerassistenzsysteme, welche den Fahrer beim Einparken des Kraftfahrzeugs in eine Parklücke unterstützen. Aus dem Stand der Technik sind bereits Fahrerassistenzsysteme bekannt, welche mit Hilfe von entsprechenden Sensoren Parklücken bzw. freie Stellplätze erkennen können und den Fahrer beim Einparkvorgang unterstützen. Derartige Verfahren können sowohl für Querparklücken als auch für Längsparklücken eingesetzt werden. Darüber hinaus sind Fahrerassistenzsysteme bekannt, die das Kraftfahrzeug bei dem Einparkvorgang semi-autonom manövrieren. Hierbei übernimmt das Fahrerassistenzsystem die Lenkung des Kraftfahrzeugs und der Fahrer betätigt weiterhin das Gaspedal und die Bremse. Ferner sind bereits Fahrerassistenzsysteme bekannt, die ein autonomes bzw. voll-autonomes Manövrieren des Kraftfahrzeugs ermöglichen.

Um das Kraftfahrzeug entsprechend manövrieren zu können, ist es erforderlich, zunächst eine Parklücke zu erkennen, in welche das Kraftfahrzeug eingeparkt werden soll. Hierzu kann das Kraftfahrzeug beispielsweise zunächst an einer potenziellen Parklücke vorbeibewegt werden. Während des Vorbeibewegens kann mit einem oder mehreren Sensoren der Umgebungsbereich des Kraftfahrzeugs erfasst werden. Anhand der Sensordaten der Sensoren kann dann die potenzielle Parklücke erkannt werden. Anschließend kann eine Fahrtrajektorie bestimmt werden, entlang welcher das Kraftfahrzeug in die Parklücke manövriert wird. Zur Erkennung der Parklücke werden beispielsweise Objekte berücksichtigt, welche die Parklücke begrenzen. Zudem ist es bekannt, Fahrbahnmarkierungen bzw. Parkflächenmarkierungen zu erkennen.

Hierzu beschreibt die EP 2 081 167 A2 ein Verfahren zur Erkennung und/oder Vermessung einer Parklücke, wobei dreidimensionale Daten einer Umgebung eines Fahrzeugs erfasst werden. Zudem werden Objekte in der Umgebung des Fahrzeugs in Parklücken begrenzende und nicht Parklücken begrenzende Objekte klassifiziert.

Darüber hinaus wird ein für das Fahrzeug als Parklücke geeigneter Raumbereich der Umgebung des Fahrzeugs ermittelt und Daten über den als Parklücke geeigneten Raumbereich werden an den Fahrer oder ein übergeordnetes System ausgegeben. Ferner kann es vorgesehen sein, dass die die Parklücke begrenzenden Objekte in flache und nicht flache Objekte klassifiziert werden. Bei einer Parklücke kann es sich beispielsweise um eine Längsparklücke handeln.

EP 2 055 536 A1 ist als nächstliegender Stand der Technik nach dem Oberbegriff des Anspruchs 1 zu sehen und beschreibt eine Parkassistenzvorrichtung zum Unterstützen eines Fahrers zum parallelen Parken eines eigenen Fahrzeugs in einer Parklücke benachbart zu einem geparkten Fahrzeug. Die Parkassistenzvorrichtung umfasst eine Neigungswinkelberechnungseinheit, die konfiguriert ist, um einen Neigungswinkel einer Bewegungsrichtung des eigenen Fahrzeugs in Bezug auf eine Seite des geparkten Fahrzeugs zu berechnen; und eine Lenkunterstützungseinheit, die konfiguriert ist, um eine Lenkunterstützung derart durchzuführen, dass der von der Neigungswinkelberechnungseinheit berechnete Neigungswinkel Null wird.

Es ist Aufgabe der vorliegenden Erfindung, eine Lösung aufzuzeigen, wie eine Längsparklücke zum Parken eines Kraftfahrzeugs zuverlässiger bestimmt werden kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Ansprüchen gelöst. Vorteilhafte Ausführungen der Erfindung sind Gegenstand der abhängigen Ansprüche.

Ein erfindungsgemäßes Verfahren dient zum Erkennen einer Längsparklücke zum Parken eines Kraftfahrzeugs. Hierbei wird während das Kraftfahrzeug relativ zu einer Parkfläche auf einer Fahrspur bewegt wird anhand von Sensordaten zumindest eines Sensors des Kraftfahrzeugs zumindest eine Fahrbahnmarkierung erfasst. Zudem wird anhand der erfassten zumindest einen Fahrbahnmarkierung die Längsparklücke innerhalb der Parkfläche erkannt. Dabei wird die Längsparklücke erkannt, falls als die zumindest eine Fahrbahnmarkierung eine Linie erfasst wird, welche die Fahrspur von der Parkfläche trennt, und falls anhand der Sensordaten ein Begrenzungsobjekt als Begrenzung für die Längsparklücke erkannt wird, wobei die Längsparklücke derart erkannt wird, dass diese parallel zu der erkannten Linie ausgerichtet ist..

Mit Hilfe des Verfahrens soll eine Längsparklücke erkannt werden, in welche das Kraftfahrzeug eingeparkt werden kann. Die Parklücke soll also zum Längsparken bzw. zur Längsaufstellung des Kraftfahrzeugs ausgebildet sein. Dabei ist es insbesondere vorgesehen, dass das Kraftfahrzeug in die Längsparklücke parallel zur Fahrspur eingeparkt wird. Hierzu wird zunächst das Kraftfahrzeug auf der Fahrspur bewegt, welche Teil einer Fahrbahn ist. Parallel neben der Fahrspur kann die Parkfläche angeordnet sein. Während des Bewegens des Kraftfahrzeugs wird mit zumindest einem Sensor des Kraftfahrzeugs ein Umgebungsbereich des Kraftfahrzeugs und insbesondere der Bereich der Parkfläche erfasst. Bei dem zumindest einen Sensor kann es sich beispielsweise um eine Kamera, einen Ultraschallsensor, einen Radarsensor oder einen Lasersensor handeln. Grundsätzlich können auch mehrere Sensoren verwendet werden, um den Umgebungsbereich bzw. den Bereich der Parkfläche zu erfassen. Durch die Sensordaten wird nun zumindest eine Fahrbahnmarkierung erkannt. Bei der Fahrbahnmarkierung kann es sich insbesondere um eine Kennzeichnung handeln, die auf die Fahrbahnoberfläche aufgebracht ist. Bei der Fahrbahnmarkierung kann es sich insbesondere um eine Linie handeln, die auf die Fahrbahnoberfläche aufgebracht ist. Ferner wird zumindest ein Objekt anhand der Sensordaten erkannt. Anhand der erkannten Fahrbahnmarkierung kann nun bestimmt werden, ob diese die Längsparklücke begrenzt. Hierzu kann die räumliche Anordnung und/oder die räumlichen Erstreckungen der zumindest einen Fahrbahnmarkierung überprüft werden. Im Anschluss daran kann dann die Längsparklücke innerhalb der Parkfläche erkannt werden.

Erfindungsgemäß ist es nun vorgesehen, dass die Längsparklücke erkannt wird, falls einerseits als die zumindest eine Fahrbahnmarkierung eine Linie erfasst wird, welche die Fahrspur von der Parkfläche abgrenzt bzw. trennt, und falls andererseits anhand der Sensordaten ein Begrenzungsobjekt als Begrenzung für die Längsparklücke erkannt wird. Die Fahrbahn umfasst zumindest eine Fahrspur, auf der das Kraftfahrzeug aktuell bewegt wird. Parallel zu der Fahrspur bzw. neben der Fahrspur ist die Parkfläche angeordnet. Beispielsweise kann sich die Parkfläche bei Rechtsverkehr in Fahrtrichtung rechts neben der Fahrspur befinden. Falls sich die Parkfläche neben der Fahrspur befindet, kann dies daran erkannt werden, dass zwischen der Fahrspur und der Parkfläche die Linie vorhanden ist. Bei dieser Linie bzw. Fahrspurmarkierung kann es sich insbesondere um eine durchgehende bzw. durchgezogene Linie mit einer vorbestimmten Linienbreite handeln. Diese Linie kann parallel zu einer Fahrtrichtung der Fahrspur verlaufen. Diese Linie kann auf die Oberfläche der Fahrbahn aufgebracht sein. Zusätzlich zu dieser Linie, die als Fahrbahnmarkierung erkannt wird, kann zudem das Begrenzungsobjekt erkannt werden, das die Längsparklücke begrenzt. Dieses Objekt kann insbesondere innerhalb der Parkfläche angeordnet sein. Somit können auch Parkflächen erkannt werden, die von der Fahrspur durch die Linie abgetrennt sind. Falls die Linie erkannt wird, wird dann zudem überprüft, ob ein zu der Linie verschiedenes Begrenzungsobjekt vorhanden ist, welches die Längsparklücke begrenzen kann. Damit kann die Parkfläche mit der Längsparklücke von anderen Bereichen der Fahrbahn unterschieden werden.

Dabei wird die Längsparklücke derart erkannt, dass diese parallel zu der erkannten Linie ausgerichtet ist. Mit anderen Worten wird die Längsparklücke orientiert. Dabei erfolgt die Orientierung derart, dass die Längsparklücke parallel zu der erkannten Linie zwischen der Fahrspur und der Parkfläche ausgerichtet wird. Somit kann eine zuverlässige Positionierung der Längsparklücke erreicht werden, in welche dann das Kraftfahrzeug beispielsweise semi-autonom eingeparkt werden kann.

Weiterhin ist es vorteilhaft, wenn die Längsparklücke erkannt wird, falls als das Begrenzungsobjekt eine der Linie gegenüberliegende Begrenzung der Parkfläche erfasst wird. Zusätzlich zu der Linie kann eine Begrenzung der Parkfläche erkannt werden. Diese Begrenzung der Parkfläche ist üblicherweise auf einer der Fahrspur abgewandten Seite der Parkfläche bzw. der Linie angeordnet. Bei dieser Begrenzung kann es sich beispielsweise wiederum um eine Fahrbahnmarkierung oder einen Bordstein handeln. Die Begrenzung kann beispielsweise auch durch eine Leitplanke, eine Wand oder eine Grünfläche gebildet sein. Die Begrenzung begrenzt die Längsparklücke insbesondere entlang der Querrichtung. Hierbei kann überprüft werden, ob die erkannte Linie und die erkannte Begrenzung im Wesentlichen parallel zueinander verlaufen. Somit kann davon ausgegangen werden, dass es sich bei dem Bereich hinter der Linie um die Parkfläche handelt und auf dieser die potenzielle Längsparklücke angeordnet ist.

In weiteren Ausführungsform ist es vorgesehen, dass überprüft wird, ob ein Abstand zwischen der erkannten Linie und der erkannten Begrenzung in einem vorbestimmten Abstandsbereich, insbesondere einem Bereich zwischen 1,8 m und 2,2 m, liegt. Ferner kann der Abstand zwischen der erkannten Linie und der erkannten Begrenzung bestimmt werden. Wenn diese beispielsweise in einem Bereich zwischen 1,8 m und 2,2 m liegt, kann mit hoher Wahrscheinlichkeit davon ausgegangen werden, dass es sich um eine Parkfläche handelt, auf der das Kraftfahrzeug abgestellt werden kann und auf der die Längsparklücke angeordnet ist. Dies ermöglicht ein zuverlässiges Erkennen der Längsparklücke.

In einer weiteren Ausführungsform wird die Längsparklücke erkannt, falls als die Begrenzung ein Bordstein erkannt wird, welcher parallel zu der Linie angeordnet ist. Hierbei wird der Bordstein als das Begrenzungsobjekt bzw. als die Begrenzung erkannt. Anhand der Sensordaten des zumindest einen Sensors kann also überprüft werden, ob einerseits die Linie erkannt wird, welche die Fahrspur von der Parkfläche abgrenzt und ob andererseits ein Bordstein vorhanden ist, der im Wesentlichen parallel zu dieser Linie angeordnet ist. Wie bereits erläutert, kann überprüft werden, ob der Abstand zwischen der Linie und dem Bordstein innerhalb des vorbestimmten Abstandsbereichs liegt. Es kann auch grundsätzlich vorgesehen sein, dass anstelle des Bordsteins eine weitere Begrenzung erkannt wird, welche einerseits die Längsparklücke begrenzt und andererseits eine Begrenzung der Parkfläche darstellt. Beispielsweise kann eine Wand, eine Leitplanke, ein Grünstreifen oder dergleichen erkannt werden. Auf diese Weise kann eine Längsparklücke zuverlässig identifiziert werden.

Weiterhin ist es vorteilhaft, wenn die Längsparklücke erkannt wird, falls als das Begrenzungsobjekt eine weitere Linie erkannt wird, welche parallel zu der erkannten Linie angeordnet ist. In diesem Fall wird als die Begrenzung der Parkfläche eine weitere Linie bzw. Fahrbahnmarkierung erkannt. Hier kann insbesondere überprüft werden, ob es sich bei der weiteren Linie um eine durchgezogene Linie handelt. Des Weiteren kann überprüft werden, ob die beiden Linien im Wesentlichen parallel zueinander angeordnet sind. Ferner kann der Abstand zwischen diesen beiden Linien erfasst werden und kontrolliert werden, ob der Abstand in dem vorbestimmten Abstandsbereich liegt. Somit kann auch eine Parkfläche erkannt werden, die in Querrichtung auf beiden Seiten von einer Linie begrenzt ist. Es kann grundsätzlich vorgesehen sein, dass innerhalb der Parkfläche ein Bordstein verläuft und das Kraftfahrzeug beim Bewegen in die Längsparklücke zumindest bereichsweise über den Bordstein bewegt wird.

In einer weiteren Ausgestaltung wird die Längsparklücke erkannt, falls als das Begrenzungsobjekt ein Objekt bekannt wird, welches innerhalb der Parkfläche angeordnet ist. Es kann also insbesondere kontrolliert werden, ob das Objekt zwischen der erkannten Linie und der Begrenzung der Parkfläche angeordnet ist. Bei dem Objekt kann es sich beispielsweise um ein geparktes Fahrzeug handeln. Das Objekt kann auch eine Mülltonne oder ein Behälter für Pflanzen sein. Anhand dieses Objekts und der erkannten Linie kann dann die Längsparklücke erkannt werden. Das Objekt, das innerhalb der Parkfläche angeordnet ist, kann dann als Begrenzung für die Längsparklücke angesehen werden. Insbesondere begrenzt das Objekt die Längsparklücke entlang der Längsrichtung. Dies ermöglicht eine zuverlässige Bestimmung der Längsparklücke.

Weiterhin ist es vorteilhaft, wenn die Längsparklücke erkannt wird, falls als Begrenzungsobjekt eine Querlinie erkannt werden, welche senkrecht zu der erkannten Linie angeordnet ist. Eine solche Querlinie, welche senkrecht zu der erkannten Linie zwischen der Fahrspur und der Parkfläche angeordnet ist, kann die Begrenzung für die Längsparklücke entlang der Längsrichtung darstellen. Diese Querlinie ist insbesondere innerhalb der Parkfläche angeordnet. Dies ermöglicht eine zuverlässige Erkennung der Längsparklücke.

In einer weiteren Ausführungsform wird zum Erkennen der Längsparklücke zusätzlich überprüft, ob eine vorbestimmte Sperrflächenmarkierung innerhalb der Parkfläche angeordnet ist. Eine solche vorbestimmte Sperrflächenmarkierung kann beispielsweise eine Doppellinie sein, welche in bestimmten Ländern darauf hindeutet, dass ein Parken am Bordstein nicht erlaubt ist. Grundsätzlich können unterschiedliche Sperrflächenmarkierungen erkannt werden, welche auf ein Halteverbot bzw. ein Parkverbot hindeuten. Falls eine derartige Sperrflächenmarkierung erkannt wird, kann davon abgesehen werden, die Längsparklücke in diesem Bereich, der der Sperrflächenmarkierung zugeordnet ist, zu erkennen bzw. festzulegen.

Weiterhin ist es vorteilhaft, wenn die zumindest eine Fahrbahnmarkierung mittels einer Kamera, eines Radarsensors und/oder eines Lasersensors als den zumindest einen Sensor erfasst wird. Bei den Fahrbahnmarkierungen kann es sich insbesondere um Linien handeln, die auf die Fahrbahnoberfläche aufgebracht sind. Diese können im Vergleich zur Fahrbahnoberfläche eine andere Farbe aufweisen. Hier kann es beispielsweise vorgesehen sein, dass diese Linien anhand der Bilder einer Kamera unter Zuhilfenahme eines entsprechenden Objekterkennungsalgorithmus erkannt werden. Grundsätzlich können die Linien auch mit Hilfe eines Radarsensors, eines Laserscanners oder eines Lidar-Sensors erkannt werden. Dabei ist es insbesondere vorgesehen, dass die Linen bzw. die Fahrbahnmarkierungen anhand ihres Reflexionsgrads im Vergleich zu der übrigen Oberfläche der Fahrbahn erkannt werden. Dies ermöglicht eine zuverlässige Erkennung der zumindest einen Fahrbahnmarkierung.

In einer weiteren Ausführungsform wird das zumindest eine Objekt mittels eines Ultraschallsensors als dem zumindest einen Sensor erfasst. Mit Hilfe des Ultraschallsensors kann ein Ultraschallsignal ausgesendet werden, das dann wieder von dem Objekt reflektiert wird. Somit kann der Abstand zu dem Objekt bestimmt werden. Hierbei kann es auch vorgesehen sein, dass das Objekt mit Hilfe des Ultraschallsensors erkannt wird, während das Kraftfahrzeug an dem Objekt vorbeibewegt wird bzw. relativ zu dem Objekt bewegt wird. Somit kann auch die räumliche Erstreckung bzw. die Anordnung des zumindest einen Objekts erfasst werden. Grundsätzlich kann es auch vorgesehen sein, dass das zumindest eine Objekt mit Hilfe einer Kamera mit Hilfe eines entsprechenden Objekterkennungsalgorithmus erkannt wird. Ferner kann auch ein Radarsensor oder ein Laserscanner zum Erkennen des zumindest einen Objekts genutzt werden.

In einer weiteren Ausführungsform wird die Fahrbahnmarkierung und das zumindest eine Objekt in eine digitale Umgebungskarte eingetragen, welche einen Umgebungsbereich des Kraftfahrzeugs beschreibt. In die digitale Umgebungskarte kann die relative Lage der Fahrbahnmarkierung und des zumindest einen Objekts bezüglich des Kraftfahrzeugs eingetragen werden. Zudem kann die relative Lage des zumindest einen Objekts zu der Fahrbahnmarkierung in die digitale Umgebungskarte eingetragen werden. Auf diese Weise kann ein Freiraum zwischen dem zumindest einen Objekt und der Fahrbahnmarkierung bestimmt werden. Damit kann bestimmt werden, ob dieser Freiraum eine potentielle Längsparklücke darstellt.

Ein erfindungsgemäßes Fahrerassistenzsystem für ein Kraftfahrzeug ist zum Durchführen eines erfindungsgemäßen Verfahrens ausgelegt. Das Fahrerassistenzsystem kann zumindest einen Sensor umfassen, der beispielsweise als Kamera, Radarsensor, Lidar-Sensor oder Laserscanner ausgebildet ist. Der Sensor kann eine entsprechende Auswerteeinrichtung zu Erkennen der Fahrbahnmarkierungen anhand der Sensordaten aufweisen. Wenn der Sensor eine Kamera ist, kann dieser insbesondere eine entsprechende Bildverarbeitungseinrichtung zum Erkennen von Objekten in den Bildern der Kamera zugeordnet sein. Es kann auch vorgesehen sein, dass das Fahrerassistenzsystem eine Mehrzahl von Sensoren beziehungsweise Kameras umfasst, die beispielsweise verteilt an dem Kraftfahrzeug angeordnet sind. Das Fahrerassistenzsystem kann ferner dazu ausgelegt sein, das Kraftfahrzeug zumindest semi-autonom in die Parklücke zu manövrieren. Dabei stellt die definierte Parkfläche die Endposition zum Einparken des Kraftfahrzeugs dar. Hier kann es vorgesehen sein, dass das Fahrerassistenzsystem einen Eingriff in die Lenkung des Kraftfahrzeugs vornimmt, um das Kraftfahrzeug entlang der berechneten Fahrtrajektorie in die Parklücke einzuparken. Zudem kann es vorgesehen sein, dass das Kraftfahrzeug mittels des Fahrerassistenzsystems voll-autonom manövriert wird. Hierbei übernimmt das Fahrerassistenzsystem zudem einen Eingriff in den Antriebsmotor und die Bremse des Kraftfahrzeugs.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches ein Fahrerassistenzsystem mit einer Mehrzahl von Sensoren aufweist;
- Fig. 2: eine Verkehrssituation, bei welcher eine Längsparklücke zum Parken des Kraftfahrzeugs anhand einer Linie zwischen einer Fahrspur und einer Parkfläche sowie anhand eines Objekts erkannt wird;
- Fig. 3: eine Verkehrssituation gemäß Fig. 2 in einer weiteren Ausführungsform;
- Fig. 4: eine Verkehrssituation, bei welcher die Längsparklücke anhand der Linie und einer zu der Linie senkrecht verlaufenden Querlinie erkannt wird; und
- Fig. 5: eine Verkehrssituation gemäß Fig. 4 in einer weiteren Ausführungsform.

In den Figuren werden gleichen und funktionsgleiche Elemente mit den gleichen Bezugszeichen versehen.

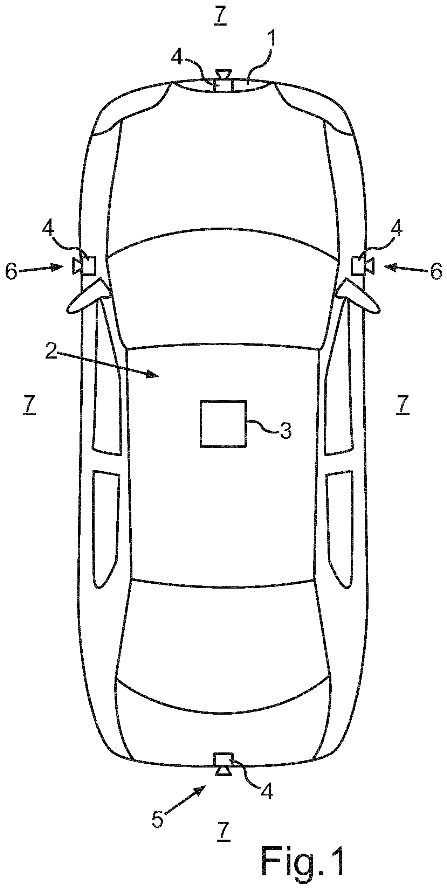

Fig. 1 zeigt ein Kraftfahrzeug 1 gemäß einer Ausführungsform der vorliegenden Erfindung in einer Draufsicht. Das Kraftfahrzeug 1 ist in dem vorliegenden Fall als Personenkraftwagen ausgebildet. Das Kraftfahrzeug 1 umfasst ein Fahrerassistenzsystem 2. Das Fahrerassistenzsystem 2 dient dazu, einen Fahrer des Kraftfahrzeugs 1 beim Einparken des Kraftfahrzeugs 1 zu unterstützen.

Das Fahrerassistenzsystem 2 umfasst wiederum eine Steuereinrichtung 3, die beispielsweise durch ein elektronisches Steuergerät des Kraftfahrzeugs 1 gebildet sein kann. Darüber hinaus umfasst das Fahrerassistenzsystem 2 zumindest einen Sensor 4, mit dem Objekte in einem Umgebungsbereich 7 des Kraftfahrzeugs 1 erfasst werden können. Der zumindest einen Sensor 4 umfasst bevorzugt eine Kamera. In dem vorliegenden Ausführungsbeispiel umfasst das Fahrerassistenzsystem 2 vier Sensoren 4, die verteilt an dem Kraftfahrzeug 1 angeordnet sind. Vorliegend ist einer der Sensoren 4 in einem Heckbereich 5 des Kraftfahrzeugs 1 angeordnet, einer der Sensoren 4 ist in einem Frontbereich des Kraftfahrzeugs 1 angeordnet und die übrigen zwei Sensoren 4 sind in einem jeweiligen Seitenbereich 6, insbesondere in einem Bereich der Seitenspiegel, angeordnet. Die Anzahl und Anordnung der Sensoren 4 des Fahrerassistenzsystems 2 ist vorliegend rein beispielhaft zu verstehen.

Mit den Sensoren 4 werden jeweils Sensordaten bereitgestellt, welche den Umgebungsbereich 7 beschreiben. Insbesondere können mit den Sensoren 4 eine Bildsequenz oder Videodaten bereitgestellt werden, welche den Umgebungsbereich 7 beschreiben. Diese Videodaten können von den Kameras an die Steuereinrichtung 3 übertragen werden. Mittels der Steuereinrichtung 3 können die Bilder ausgewertet werden. Die Steuereinrichtung 3 kann beispielsweise eine entsprechende Bildverarbeitungseinrichtung umfassen, mittels welcher Objekte in dem Bildern erkannt werden können. Es kann auch vorgesehen sein, dass jeder dem der Sensoren 4 eine separate Steuereinrichtung 3 zugeordnet ist. Das Fahrerassistenzsystem 2 kann auch weitere Sensoren aufweisen, mit denen Objekt im Umgebungsbereich 7 erfasst werden können. Beispielsweise kann das Fahrerassistenzsystem 2 Ultraschallsensoren, Radarsensoren und/oder Lasersensoren aufweisen.

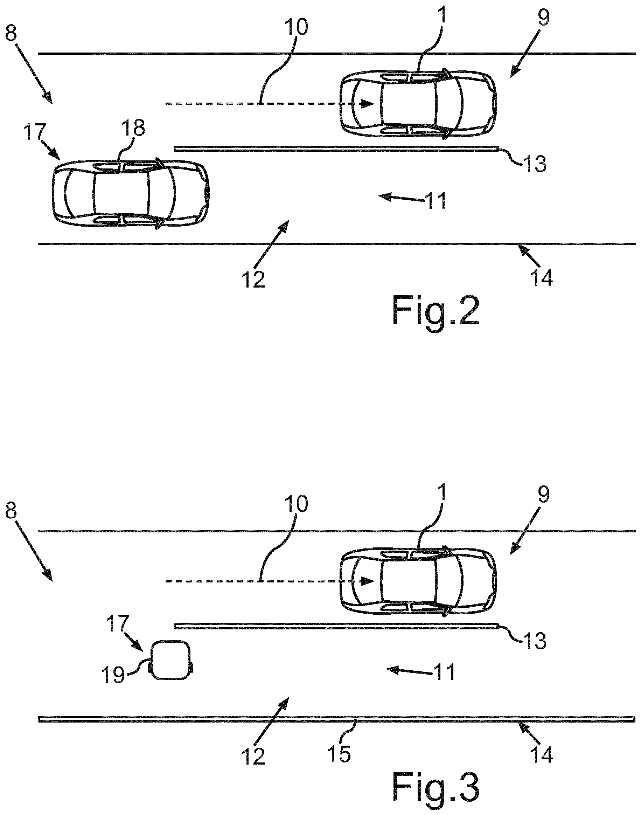

Fig. 2 zeigt eine Verkehrssituation, bei welcher eine Längsparklücke 11 zum Einparken des Kraftfahrzeugs 1 bestimmt werden soll. Zum Bestimmen der Längsparklücke 11 wird das Kraftfahrzeug 1 auf einer Fahrspur 9 einer Fahrbahn 8 bewegt. Vorliegend wird das Kraftfahrzeug 1 entlang einer Fahrtrichtung 10 der Fahrspur 9 bewegt. In Fahrtrichtung 10 rechts neben Fahrspur 9 befindet sich eine Parkfläche 12. Während des Vorbeibewegens des Kraftfahrzeugs 1 an der Parkfläche 12 wird der Umgebungsbereich 7 des Kraftfahrzeugs 1 kontinuierlich mit den Sensoren 4 bzw. den Kameras erfasst. Mit Hilfe eines entsprechenden Objekterkennungsalgorithmus kann zumindest eine Fahrbahnmarkierung erkannt werden. Vorliegend kann als die Fahrbahnmarkierung eine Linie 13 erkannt werden, welche die Fahrspur 9 von der Parkfläche 12 abgrenzt bzw. trennt. Falls diese Linie 13 kann davon ausgegangen werden, dass es sich um die Parkfläche 12 mit der Längsparklücke handelt. Um die Längsparklücke 11 als solche zu erkennen ist es zudem vorgesehen, dass ein Begrenzungsobjekt erkannt wird, welches die Längsparklücke 11 begrenzt.

Das Begrenzungsobjekt wird anhand der Sensordaten der Sensoren 4 erkannt. Als das Begrenzungsobjekt kann eine Begrenzung 14 der Parkfläche 12 erkannt werden. Bei der Begrenzung 14 kann es sich zudem um die Begrenzung der Fahrbahn 8 handeln. Hierbei kann zudem überprüft werden, ob diese Begrenzung 14 parallel zu der Linie 13 angeordnet ist. Darüber hinaus kann anhand der Sensordaten ein Abstand zwischen der Linie 13 und der Begrenzung 14 bestimmt werden. Falls dieser Abstand beispielsweise in einem Bereich zwischen 1,8 m und 2,2 m liegt, kann davon ausgegangen werden, dass es sich bei dem Zwischenraum zwischen der Linie 13 und der Begrenzung 14 um die Parkfläche 12 mit der Längsparklücke 11 handelt.

Anhand der Sensordaten der Sensoren 4 kann als das Begrenzungsobjekt zudem ein Objekt 17 erfasst werden, das innerhalb der Parkfläche 12 angeordnet ist. Dieses Objekt 17 stellt eine Begrenzung der Längsparklücke 11 entlang der Längsrichtung dar. Bei dem Objekt 17 handelt es sich vorliegend um ein geparktes Fahrzeug 18. Vorliegend kann die Längsparklücke auf Grundlage der Linie 13, der Begrenzung 14 und des Objekts17 bestimmt werden.

Fig. 3 zeigt eine Verkehrssituation gemäß Fig. 2 in einer weiteren Ausführungsform. Vorliegend ist die Begrenzung 14 durch einen Bordstein 15 gebildet. Dieser kann anhand der Sensordaten der Sensoren 4 bestimmt werden. Auch hier ist ein Objekt 17 innerhalb der Parkfläche 12 angeordnet. Bei dem Objekt 17 handelt es sich dabei um eine Mülltonne 19. Auch hier kann die Längsparklücke 11 - wie zuvor im Zusammenhang mit Fig. 2 erläutert - bestimmt werden.

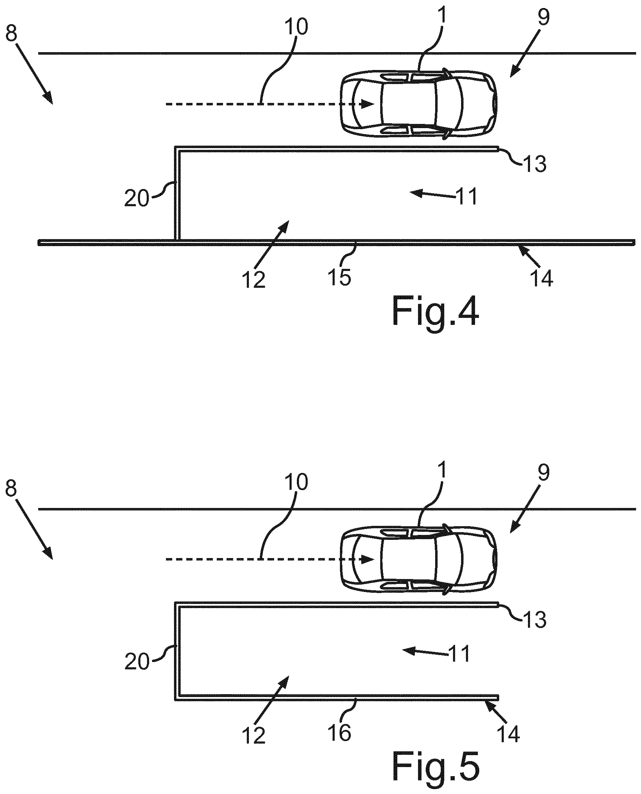

Fig. 4 zeigt eine weitere Verkehrssituation. Auch hier wird anhand der Sensordaten der Sensoren 4 die Linie 13 erkannt, die zwischen der Fahrspur 9 und der Parkfläche 12 angeordnet ist. Darüber hinaus wird als die Begrenzung 14 der Bordstein 15 erkannt. Als weiteres Begrenzungsobjekt wird eine Querlinie 20 erkannt. Bei der Querlinie 20 handelt es sich ebenfalls um eine Fahrbahnmarkierung, die auf die Oberfläche der Fahrbahn 8 aufgebracht ist. Somit kann auch bei einer derartigen Verkehrssituation die Längsparklücke 11 zuverlässig erkannt werden.

Fig. 5 zeigt eine Verkehrssituation gemäß Fig. 4 in einer weiteren Ausführungsform. Hierbei wird als die Begrenzung 14 eine weitere Linie 16 erkannt, welche parallel zu der Linie 13 angeordnet ist. Auch hier wird die Querlinie 20 anhand der Sensordaten der Sensoren 4 erkannt. Somit kann auch in diesem Fall die Längsparklücke 11 innerhalb der Parkfläche 12 bestimmt werden.

Die Längsparklücke 11 kann dabei derart bestimmt werden, dass diese zu der Linie 13 orientiert wird. Insbesondere kann die Längsparklücke 11 parallel zu der Linie 13 orientiert. Im Anschluss daran kann dann das Kraftfahrzeug zumindest semi-autonom in die Längsparklücke 11 eingeparkt werden. Dazu kann mit Hilfe der Steuereinrichtung 3 eine entsprechende Fahrtrajektorie bzw. Einparktrajektorie bestimmt werden, entlang der das Kraftfahrzeug zum Einparken in die Längsparklücke 11 manövriert wird.

## Patentansprüche

1. Verfahren zum Erkennen einer Längsparklücke (11) zum Parken eines Kraftfahrzeugs (1), bei welchem während das Kraftfahrzeug (1) relativ zu einer Parkfläche (12) auf einer Fahrspur (9) bewegt wird anhand von Sensordaten zumindest eines Sensors (4) des Kraftfahrzeugs (1) zumindest eine Fahrbahnmarkierung erfasst wird und anhand der erfassten zumindest einen Fahrbahnmarkierung die Längsparklücke (11) innerhalb der Parkfläche (12) erkannt wird,
wobei die Längsparklücke (11) erkannt wird, falls als die zumindest eine Fahrbahnmarkierung eine Linie (13) erfasst wird, welche die Fahrspur (9) von der Parkfläche (12) trennt, und falls anhand der Sensordaten ein Begrenzungsobjekt als Begrenzung für die Längsparklücke (11) erkannt wird,
**dadurch gekennzeichnet, dass**
die Längsparklücke (11) derart erkannt wird, dass diese parallel zu der erkannten Linie (13) ausgerichtet ist.

2. Verfahren nach Anspruch 1,
**dadurch gekennzeichnet, dass**
die Längsparklücke (11) erkannt wird, falls als das Begrenzungsobjekt eine der Linie (13) gegenüberliegende Begrenzung (14) der Parkfläche (12) erfasst wird.

3. Verfahren nach Anspruch 2,
**dadurch gekennzeichnet, dass**
die Längsparklücke (11) erkannt wird, falls ein Abstand zwischen der erkannten Linie (13) und der erkannten Begrenzung (14) in einem vorbestimmten Abstandsbereich, insbesondere in einem Bereich zwischen 1,8 m und 2,2 m, liegt.

4. Verfahren nach Anspruch 2 oder 3,
**dadurch gekennzeichnet, dass**
die Längsparklücke (11) erkannt wird, falls als die Begrenzung (14) ein Bordstein (15) erkannt wird, welcher parallel zu der Linie (13) angeordnet ist.

5. Verfahren nach einem der Ansprüche 2 bis 4,
**dadurch gekennzeichnet, dass**
die Längsparklücke (11) erkannt, falls als die Begrenzung (14) eine weitere Linie (16) erkannt wird, welche parallel zu der erkannten Linie (13) angeordnet ist.

6. Verfahren nach einem der vorhergehenden Ansprüche,
**dadurch gekennzeichnet, dass**
die Längsparklücke (11) erkannt wird, falls als das Begrenzungsobjekt zumindest ein Objekt (17) erkannt wird, welches innerhalb der Parkfläche (12) angeordnet ist.

7. Verfahren nach einem der vorhergehenden Ansprüche,
**dadurch gekennzeichnet, dass**
die Längsparklücke (11) erkannt wird, falls als das Begrenzungsobjekt eine Querlinie (20) erkannt wird, welche senkrecht zu der erkannten Linie (13) angeordnet ist.

8. Verfahren nach einem der vorhergehenden Ansprüche,
**dadurch gekennzeichnet, dass**
zum Erkennen der Längsparklücke (11) zusätzlich überprüft wird, ob eine vorbestimmte Sperrflächenmarkierung innerhalb der Parkfläche (12) angeordnet ist.

9. Verfahren nach einem der vorhergehenden Ansprüche,
**dadurch gekennzeichnet, dass**
die zumindest eine Fahrbahnmarkierung mittels einer Kamera, eines Radarsensors und/oder eines Lasersensors als dem zumindest einen Sensor erfasst wird.

10. Verfahren nach Anspruch 6,
**dadurch gekennzeichnet, dass**
das zumindest eine Objekt (17) mittels eines Ultraschallsensors als dem zumindest einen Sensor erfasst wird.

11. Verfahren nach Anspruch 6 oder 10,
**dadurch gekennzeichnet, dass**
die Fahrbahnmarkierung und das zumindest eine Objekt (17) in eine digitale Umgebungskarte eingetragen werden, welche einen Umgebungsbereich (7) des Kraftfahrzeugs (1) beschreibt.

12. Fahrerassistenzsystem (2) für ein Kraftfahrzeug (1), welches zum Durchführen eines Verfahrens nach einem der vorhergehenden Ansprüche ausgelegt ist.

13. Kraftfahrzeug (1) mit einem Fahrerassistenzsystem (2) nach Anspruch 12.

## Claims

1. Method for detecting a longitudinal parking space (11) for parking a motor vehicle (1), in which while the motor vehicle (1) is being moved relative to a parking area (12) on a lane (9), at least one roadway marking is sensed on the basis of sensor data of at least one sensor (4) of the motor vehicle (1) and the longitudinal parking space (11) within the parking area (12) is detected on the basis of the sensed, at least one roadway marking,
when the longitudinal parking space (11) is detected if a line (13) which divides the lane (9) from the parking area (12) is sensed as the at least one roadway marking and if a boundary object is detected as a boundary for the longitudinal parking space (11) on the basis of the sensor data,
**characterized in that**
the longitudinal parking space (11) is detected in such a way that the latter is oriented parallel to the detected line (13).

2. Method according to Claim 1,
**characterized in that**
the longitudinal parking space (11) is detected if a boundary (14) lying opposite the line (13), of the parking area (12) is sensed as the boundary object.

3. Method according to Claim 2,
**characterized in that**
the longitudinal parking space (11) is detected if a distance between the detected line (13) and the detected boundary (14) lies in a predetermined distance range, in particular in a range between 1.8 m and 2.2 m.

4. Method according to Claim 2 or 3,
**characterized in that**
the longitudinal parking space (11) is detected if a kerbstone (15), which is arranged parallel to the line (13), is detected as the boundary (14).

5. Method according to one of Claims 2 to 4,
**characterized in that**
the longitudinal parking space (11) is detected if a further line (16) which is arranged parallel to the detected line (13) is detected as the boundary (14).

6. Method according to one of the preceding claims,
**characterized in that**
the longitudinal parking space (11) is detected if at least one object (17) which is arranged inside the parking area (12) is detected as the boundary object.

7. Method according to one of the preceding claims,
**characterized in that**
the longitudinal parking space (11) is detected if a transverse line (20) which is arranged perpendicular to the detected line (13) is detected as the boundary object.

8. Method according to one of the preceding claims,
**characterized in that**
in order to detect the longitudinal parking space (11) it is additionally checked whether a predetermined barred area marking is arranged within the parking area (12).

9. Method according to one of the preceding claims,
**characterized in that**
the at least one roadway marking is sensed by means of a camera, a radar sensor and/or a laser sensor as the at least one sensor.

10. Method according to Claim 6,
**characterized in that**
the at least one object (17) is sensed by means of an ultrasonic sensor as the at least one sensor.

11. Method according to Claim 6 or 10,
**characterized in that**
the roadway marking and the at least one object (17) are entered in a digital map of the surroundings which describes a surrounding area (7) of the motor vehicle (1) .

12. Driver assistance system (2) for a motor vehicle (1), which system is configured to carry out a method according to one of the preceding claims.

13. Motor vehicle (1) having a driver assistance system (2) according to Claim 12.

## Revendications

1. Procédé de reconnaissance d'un créneau de stationnement (11) en vue de stationner un véhicule automobile (1), avec lequel, pendant que le véhicule automobile (1) est déplacé sur une voie de circulation (9) par rapport à une aire de stationnement (12), au moins un marquage de la chaussée est détecté à l'aide de données de capteur d'au moins un capteur (4) du véhicule automobile (1) et le créneau de stationnement (11) à l'intérieur de l'aire de stationnement (12) est reconnu à l'aide de l'au moins un marquage de la chaussée détecté, le créneau de stationnement (11) étant reconnu dans le cas où l'au moins un marquage de la chaussée détecté est une ligne (13) qui sépare la voie de circulation (9) de l'aire de stationnement (12), et dans le cas où un objet de délimitation en tant que délimitation du créneau de stationnement (11) est reconnu à l'aide des données de capteur,
**caractérisé en ce que**
le créneau de stationnement (11) est reconnu de telle sorte que celui-ci est orienté parallèlement à la ligne (13) reconnue.

2. Procédé selon la revendication 1, **caractérisé en ce que** le créneau de stationnement (11) est reconnu dans le cas où l'objet de délimitation détecté est une délimitation (14) de l'aire de stationnement (12) qui se trouve à l'opposé de la ligne (13).

3. Procédé selon la revendication 2, **caractérisé en ce que** le créneau de stationnement (11) est reconnu dans le cas où un écart entre la ligne (13) reconnue et la délimitation (14) reconnue se trouve dans une plage d'écarts prédéterminée, notamment dans une plage entre 1,8 m et 2,2 m.

4. Procédé selon la revendication 2 ou 3,
**caractérisé en ce que** le créneau de stationnement (11) est reconnu dans le cas où la délimitation (14) reconnue est une pierre de bordure (15) qui est disposée parallèlement à la ligne (13).

5. Procédé selon l'une des revendications 2 à 4,
**caractérisé en ce que** le créneau de stationnement (11) est reconnu dans le cas où la délimitation (14) reconnue est une ligne supplémentaire (16) qui est disposée parallèlement à la ligne (13) reconnue.

6. Procédé selon l'une des revendications précédentes, **caractérisé en ce que** le créneau de stationnement (11) est reconnu dans le cas où l'objet de délimitation reconnu est au moins un objet (17) qui est disposé à l'intérieur de l'aire de stationnement (12).

7. Procédé selon l'une des revendications précédentes, **caractérisé en ce que** le créneau de stationnement (11) est reconnu dans le cas où l'objet de délimitation reconnu est une ligne transversale (20) qui est disposée perpendiculairement à la ligne (13) reconnue.

8. Procédé selon l'une des revendications précédentes, **caractérisé en ce que** pour reconnaître le créneau de stationnement (11), un contrôle est en plus effectué afin de vérifier si un marquage de surface interdite prédéterminé est disposé à l'intérieur de l'aire de stationnement (12).

9. Procédé selon l'une des revendications précédentes, **caractérisé en ce que** l'au moins un marquage de la chaussée est détecté au moyen d'une caméra, d'un capteur radar et/ou d'un capteur laser en tant que l'au moins un capteur.

10. Procédé selon la revendication 6, **caractérisé en ce que** l'au moins un objet (17) est détecté au moyen d'un capteur à ultrasons en tant que l'au moins un capteur.

11. Procédé selon la revendication 6 ou 10,
**caractérisé en ce que** le marquage de la chaussée et l'au moins un objet (17) sont entrés dans une carte d'environnement numérique qui décrit une zone environnante (7) du véhicule automobile (1).

12. Système d'assistance au conducteur (2) pour un véhicule automobile (1), lequel est conçu pour mettre en œuvre un procédé selon l'une des revendications précédentes.

13. Véhicule automobile (1) comprenant un système d'assistance au conducteur (2) selon la revendication 12.
